Europäisches Patentamt

European Patent Office

Office européen des brevets

(11) Veröffentlichungsnummer: **0 214 372**

**A1**

(12) # EUROPÄISCHE PATENTANMELDUNG

(21) Anmeldenummer: **86107581.0**

(22) Anmeldetag: **04.06.86**

(51) Int. Cl.⁴: **B 65 B 31/04**

(30) Priorität: **12.07.85 DE 3524926**

(43) Veröffentlichungstag der Anmeldung:
**18.03.87 Patentblatt 87/12**

(84) Benannte Vertragsstaaten:
**AT CH DE FR GB IT LI SE**

(71) Anmelder: **ROBERT BOSCH GMBH**
**Postfach 50**
**D-7000 Stuttgart 1(DE)**

(72) Erfinder: **Buchner, Norbert, Prof. Dr.**
**Seehaldenweg 68**
**D-7057 Winnenden 6(DE)**

(72) Erfinder: **Liede, Dieter**
**Neuffenstrasse 8**
**D-7141 Möglingen(DE)**

(72) Erfinder: **Domke, Klaus, Dr.-Ing.**
**Hegelstrasse 3**
**D-7257 Ditzingen 5(DE)**

(72) Erfinder: **Vögele, Günther**
**Cheruskerstrasse 19**
**D-7036 Schönaich(DE)**

(72) Erfinder: **Engelhardt, Walter**
**Baltenstrasse 41**
**D-7000 Stuttgart 50(DE)**

(54) **Vorrichtung zum Begasen und Verschliessen eines Verpackungsbehälters.**

(57) Es wird eine Vorrichtung zum Begasen und Verschließen eines Verpackungsbehälters mit einem Deckel vorgeschlagen, der einen U-förmigen, den oberen Rand des Verpackungsbehälters umgreifenden Randflansch hat. Die Vorrichtung hat einen zentralen Siegelstempel (10), mehrere gegen dessen unteren Bereich verschieb- und preßbare Klemmbacken (12) und unterhalb dieser einen Ring (15), in dessen Innenseite (23) Begasungskanäle (19) münden. Nach Zuführen eines gefüllten Verpackungsbehälters (1) mit einem lose auf dessen oberen Öffnung aufgelegten Deckels (2) in Deckung mit dem Siegelkopf, wird dieser abgesenkt, bis der Rand des Deckels über einen Anschlag (26) an der Oberseite des Ringes springt. Nach Abheben des Deckels vom Behälter in eine Stellung, in der die Innenseite des Ringes einen Raum oberhalb des Behälters seitlich begrenzt, wird durch die Kanäle ein Schutzgas in diesen Raum geleitet, das die vorhandene Luft durch einen schmalen Spalt (14) zwischen dem unteren Teil der Innenseite des Ringes und dem oberen äußeren Randbereich des Behälters fortspült. Nach dem Spülvorgang und dem Absenken des Schließkopfes mit dem Deckel auf den Kopf des Behälters verpressen die Klemmbacken den Randflansch des Deckels mit dem oberen Rand des Behälters, wobei gleichzeitig unter Zuführung von Wärme dessen Randflansch (3) mit dem Behälter versiegelt oder verschweißt wird.

FIG.1

EP 0 214 372 A1

R. 20117
27.6.1985 Gl/Pi

ROBERT BOSCH GMBH, 7000 STUTTGART 1

Vorrichtung zum Begasen und Verschließen eines Verpackungsbehälters

Stand der Technik

Die Erfindung geht aus von einer Vorrichtung zum Begasen und
Verschließen eines Verpackungsbehälters nach der Gattung des
Hauptanspruchs. Bei einer beispielsweise durch die US-PS
2 915 862 bekannten Vorrichtung dieser Art sind in dem Siegelkopf zum Fassen eines Deckels aus Stahlblech Magnete angeordnet, die den lose auf dem Behälter aus Glas aufliegenden Deckel anziehen. Deckel aus nicht magnetischem Material
können mit dieser bekannten Vorrichtung nicht verarbeitet
werden. Ferner wird zum Erzeugen eines Unterdrucks im Kopfraum des Glasbehälters vor dem Aufdrücken des kappenförmigen
Deckels auf den Öffnungsrand des Behälters Dampf durch die
Düsen in den Kopfraum geblasen. Da der Spalt zwischen dem
Ring und dem Behälterkopf relativ weit ist, wird von den aus
den Düsen austretenden Dampfstrahlen durch Injektorwirkung
Luft aus der Umgebung mitgerissen. Trotz des Vorhandenseins
eines Luftanteils neben dem Wasserdampf im Kopfraum des Behälters wird beim Abkühlen des Dampfes im Kopfraum ein genügend hoher Unterdruck erzeugt, der den Deckel auf dem Be-

...

hälter mit Sicherheit festhält. Ein vollständiges Entfernen
der Luft aus dem Behälterkopfraum läßt sich aber mit der bekannten Vorrichtung nicht erreichen.

Vorteile der Erfindung

Die erfindungsmäße Begasungs- und Verschließvorrichtung mit
den kennzeichnenden Merkmalen des Hauptanspruchs hat demgegenüber den Vorteil, daß die im Kopfraum des Verpackungsbehälters
befindliche Luft mit einer verhältnismäßig geringen Schutzgasmenge vollständig herausgespült werden kann, so daß das verpackte Produkt während seiner Lagerzeit nicht geschädigt oder
dessen Oberfläche verfärben kann. Da ein Einsaugen von Umgebungsluft beim Kopfraumspülen mit inertem und sterilem Gas
durch den engen Spalt zwischen Behälterkopf und Ring verhindert wird, ist die Vorrichtung auch in Verbindung mit einer
aseptisch abfüllenden Verpackungsanlage einsetzbar, bei der
die einzelnen Behandlungsvorrichtungen in steriler Luft-Atmosphäre angeordnet sind. Ferner ist die erfindungsgemäße
Vorrichtung zum dichten Verschließen von Verpackungsbehältern mit Deckeln verwendbar, die keine magnetischen Eigenschaften haben.

Durch die in den Unteransprüchen aufgeführten Maßnahmen sind
vorteilhafte Ausgestaltungen der im Hauptanspruch angegebenen Begasungs- und Verschließvorrichtung möglich. Besonders
vorteilhaft ist die Verknüpfung des Vorsprunges des Ringes
mit auf dem Ring verschiebbaren und mit einem zentralen Siegelstempel zusammenwirkenden Klemmbacken, so daß der Deckel
durch Heißsiegelung mit dem Behälter verbunden werden kann.

Zeichnung

Ein Ausführungsbeispiel der Erfindung ist in der Zeichnung dargestellt und in der nachfolgenden Beschreibung näher erläutert.

...

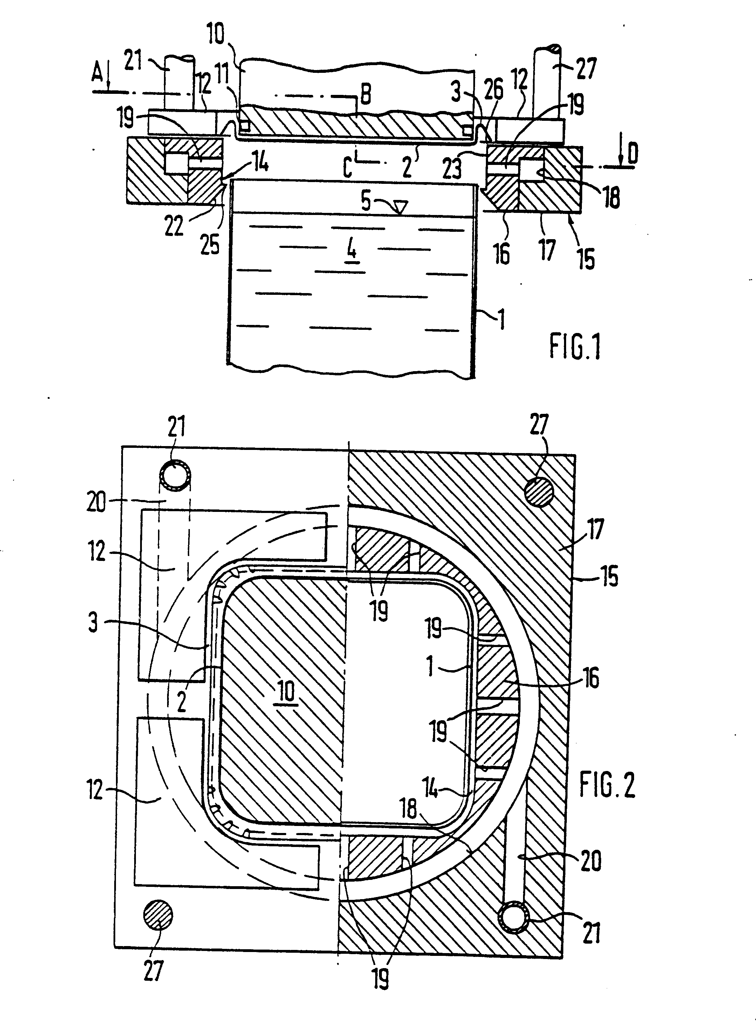

Es zeigen Figur 1 eine Begasungs- und Verschließvorrichtung
für Behälter mit Deckel vereinfacht im Längsschnitt, Figur 2
die Vorrichtung nach Figur 1 im Querschnitt in den Ebenen
A-B-C-D der Figur 1 und die Figuren 3 bis 6 die Vorrichtung
nach Figur 1 vereinfacht in mehreren verschiedenen Arbeitsstellungen.

Beschreibung des Ausführungsbeispiels

Die Begasungs- und Verschließvorrichtung ist insbesondere geeignet für Verpackungsbehälter nach der DE-OS 31 10 697. Derartige Behälter haben einen Rumpf 1 mit in dessen Öffnungen
eingesetzten und versiegelten Deckeln 2. Der Rumpf 1, der
vorzugsweise einen quadratischen Querschnitt mit gerundeten
Ecken aufweist, ist aus einem Packstoff geformt, der zumindest auf seiner Innenseite eine Schicht aus einem thermoplastischen Kunststoff hat. Die Deckel 2 sind ebenfalls aus
einem Mehrschichtpackstoff geformt, der neben einer äußeren
Trägerschicht eine mittlere Sperrschicht aus Aluminium und
eine innere Schicht aus einem thermoplastischen Kunststoff
hat. Die Deckel 2 haben einen abstehenden U-förmigen Randflansch 3, dessen äußerer Schenkel vor dem Verbinden mit dem
Rumpf 1 nach außen absteht. Nach dem Füllen der Behälter
wird auf deren Füllöffnung ein Deckel 2 lose aufgelegt und
die so gegen die umgebende Atmosphäre abgedeckten Behälter
in Deckung mit der Begasungs- und Verschließvorrichtung verbracht. Das Abdecken der gefüllten Behälter hat den Vorteil,
daß während deren Förderung kein Gasaustausch des Kopfraumes
mit der umgebenden Atmosphäre stattfinden kann, so daß bei
aseptischer Abfüllung beim Überführen der gefüllten Behälter in die Begasungs- und Schließvorrichtung keine Keime aus
der Umgebungsluft in die Behälter gelangen können.

...

Die Begasungs- und Verschließvorrichtung hat einen zentralen Siegelstempel 10, dessen unteres Ende dem von dem U-förmigen Randflansch 3 des Deckels 2 umgebenen Raum angepaßt ist. Nahe seinem unteren Ende hat er in einer Umfangsnut eine Spule 11, die mit einem hochfrequenten Wechselstrom beaufschlagt werden kann. In Höhe der Spule 11 ist der Stempel 10 mit vier winkelförmigen Klemmbacken 12 umgeben, die aus einer äußeren Stellung, in der sie einen bestimmten Abstand zur Umfangsfläche des Stempels 10 haben, gegen diese bewegt und gedrückt werden können. Unterhalb der Klemmbacken 12 ist ein Ring 15 angeordnet, dessen Öffnungsquerschnitt dem Querschnitt des Rumpfes 1 der Verpackungsbehälter so angepaßt ist, daß zwischen dem eingetauchten Rumpf 1 ein umlaufender Spalt 14 von etwa 2 mm Breite verbleibt. Der Ring 15 ist aus zwei Ringteilen 16, 17 zusammengesetzt, die so ausgespart sind, daß ein kreisförmiger Ringkanal 18 im Ring 15 gebildet wird. Von der Innenseite 23 des Ringes 15 erstrecken sich im Ringteil 16 mehrere Kanäle 19 zum Ringkanal 18. Diagonal versetzt münden in den Ringkanal 18 tangential zwei Zuführungskanäle 20 im äußeren Ringteil 17, die mit je einem Zuleitungsrohr 21 verbunden sind. Zum Zentrieren des Kopfes eines Behälters in dem Ring 15 hat der innere Ringteil 16 am Übergang von seiner Unterseite zu seiner Öffnung eine Schrägfläche 22. Am Übergang der Innenseite 23 des inneren Ringes 16 zu der Schrägfläche 22 steht eine umlaufende Nase 25 vor, die die Zentrierung eines Behälters unterstützt und die eine Spaltdichtung zwischen dem Innenraum des Ringes 15 und der Außenfläche des Behälters nahe dessen oberer Öffnung bildet. Der Spalt zwischen der Nase 25 und der Außenseite des Behälters ist etwa 1 mm weit. Der an die innere Öffnung des Ringes 15 angrenzende Randbereich der oberen Fläche des Ringes 15 bildet eine Anlage oder einen Anschlag 26 für den äußeren Rand des abstehenden Schenkels des Randflansches 3 des Deckels 2. Dieser Anschlag 26 wird nach außen durch die Klemmflächen der Klemmbacken 12 begrenzt. Der Ring 15 ist mit zwei Trag-

...

bolzen 27 an einem auf- und abbewegbaren, nicht dargestellten Träger befestigt, an dem auch der Stempel 10 angeordnet
ist.

Die beschriebene Vorrichtung arbeitet wie folgt:

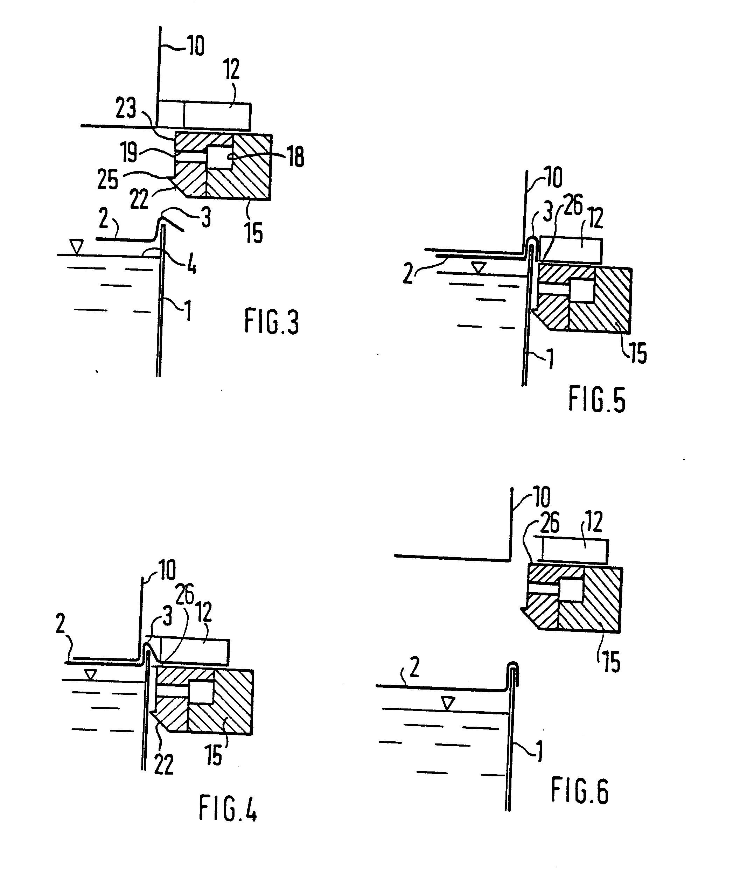

Ein beispielsweise mit einer Flüssigkeit 4 gefüllter Behälter,
auf dessen obere Öffnung des Rumpfes 1 ein Deckel 2 so aufgelegt ist, daß dessen U-förmiger Randflansch 3, dessen äußerer
Schenkel nach außen weist, den oberen Rand des Rumpfes 1 lose
umgreift, wird in senkrechte Ausrichtung unter den Stempel 10
und den Ring 15 der Begasungs- und Verschließvorrichtung verbracht (Figur 3). Darauf wird die aus Stempel 10, Klemmbacken
12 und Ring 15 bestehende Einheit in eine untere Stellung abgesenkt, wobei der abstehende äußere Schenkel des Randflansches 3 des Deckels 2 zunächst von der Schrägfläche 22 und
darauf von der Innenseite des Ringes 15 nach innen umgebogen
wird und schließlich beim Überfahren der Oberseite des Ringes
15 wieder nach außen vor die Klemmbacken 12 zurückspringt
(Figur 4). Bei diesem Abwärtshub taucht das untere Ende des
Stempels 10 in den vom Randflansch 3 umgebenen Hohlraum des
Deckels 2 ein. Beim darauffolgenden Anheben der Einheit wird
der Deckel 2, dessen Randflansch 3 mit seinem äußeren Schenkel auf der einen Anschlag 26 bildenden Oberseite des Ringes
15 aufliegt vom Rumpf 1 abgehoben. Die Einheit wird soweit
angehoben, bis sich die Nase 25 auf der Innenseite des Ringes
15 wenig unterhalb der Oberkante des Rumpfes 1 befindet (Begasungsstellung Figur 1). In dieser Stellung begrenzen die
Unterseite des vom Ring 15 getragenen Deckels 2, die Innenseite 23 des Ringes 15 und der Kopfraum oberhalb des Flüssigkeitsspiegels 5 des Verpackungsbehälters einen Raum, der
lediglich durch den Spalt 14 zwischen der Außenfläche des
Verpackungsbehälters und dem unteren Teil mit der Nase 25
der Innenfläche des Ringes 15 mit der umgebenden Atmosphäre
verbunden ist. Bereits beim Anheben des Stempels 10, der

...

Backen 12 und des Ringes 15 mit dem Deckel 2 wird Schutzgas durch die Zuleitungsrohre 21 in den Ringkanal 18 geleitet, wo es sich gleichmäßig verteilt und durch die Kanäle 19 in den beschriebenen Raum einströmt. Dabei wird dort vorhandene Luft verdrängt und durch den Spalt 14 an der Nase 25 vorbei in die umgebende Atmosphäre fortgespült. Nach einer gewissen Spüldauer und während noch Schutzgas zugeführt wird, werden der Stempel 10, die Klemmbacken 12 und der Ring 15 zusammen mit dem Deckel 2 wieder in die untere Stellung verbracht, in der der Deckel 2 in die Öffnung des Rumpfes 1 eintaucht und sein Randflansch 3 den oberen Rand des Rumpfes 1 umgreift. In dieser Stellung werden die vier Klemmbacken 12 zur Mittenachse zubewegt, wobei sie zunächst den äußeren Schenkel des Randflansches 3 gegen die Außenseite des Rumpfes 1 anlegen und darauf mit dem Stempel 10 als Gegenhalt den Randflansch 3 mit dem oberen Rand des Rumpfes 1 verpressen (Figur 5). Während dieses Verpressens wird der Induktionsspule 11 ein hochfrequenter Wechselstromstoß zugeführt, so daß infolge der induktiven Ankopplung des angrenzenden Bereichs der Metallschicht des Deckels 2 in dieser Wärme erzeugt wird, welche auf die angrenzenden thermoplastischen Schichten des Deckels 2 und des Rumpfes 1 übertragen wird, so daß diese aufschmelzen und sich beim Abkühlen verbinden. Nach dem Abkühlen der so gebildeten Schweißnaht werden die Klemmbacken 12 wieder zurückgezogen und darauf die aus Stempel 10, Klemmbacken 12 und Ring 15 bestehende Einheit in ihre Ausgangsstellung nach oben zurückgeführt. Die Verbindung des Ringkanals 18 mit der Schutzgasquelle wird unterbrochen, sobald die Klemmbacken 12 den Randflansch 3 verpreßt haben.

Ergänzend wird darauf hingewiesen, daß die Anschlagfläche 26, auf der sich der Deckel 2 beim Anheben mit seinem Randflansch 3 abstützt, nicht Teil der Oberseite des Ringes 15 zu sein braucht, sondern auch als Vorsprung oder als Nut an diesem ausgestaltet sein kann.

R. 20117
27.6.1985 Gl/Pi

0214372.

ROBERT BOSCH GMBH, 7000 STUTTGART 1

Ansprüche

1. Vorrichtung zum Begasen und Verschließen eines Verpackungsbehälters mit einem Deckel, die einen Schließkopf mit einem
über den Kopf des Behälters absenkbaren, mit nach innen gerichteten Düsen versehenen Ring aufweist, der zum Erfassen des zunächst lose auf dem Behälter aufgelegten Deckels aus
einer oberen Stellung in eine untere, den Deckel und den Behälterkopf umgebende Stellung absenkbar ist und der von dort in
eine mittlere Stellung verbringbar ist, in der der erfaßte Dekkel über der Öffnung des Behälters gehalten wird und aus den
Düsen ein Schutzgas in den Kopfraum des Behälters zum Verdrängen von Luft geblasen wird, dadurch gekennzeichnet, daß der
Ring (15) einen Anschlag (26) für den Rand des Deckels (2)
aufweist, so daß der Rand des Deckels beim Absenken des
Schließkopfes von der Innenfläche des Ringes zunächst umgebogen wird und dann oberhalb des Anschlags zurückspringt, so
daß der Deckel beim anschließenden Heben des Schließkopfes in
die Begasungsstellung mit dem Anschlag vom Behälter abgehoben
wird, und daß der untere Bereich des Rings in der Begasungsstellung den oberen Rand des Behälters mit schmalem Spalt (14)
umgibt.

2. Vorrichtung nach Anspruch 1, dadurch gekennzeichnet, daß
der Anschlag (26) Teil der Oberseite des Ringes (15) ist und
daß sich an die Innenseite (23) des Ringes (15) im unteren
Bereich eine Schrägfläche (22) anschließt.

...

3. Vorrichtung nach Anspruch 2, dadurch gekennzeichnet, daß am Übergang der Innenseite (23) des Ringes (15) zu der Schrägfläche (22) eine vorstehende Nase (25) angeordnet ist.

4. Vorrichtung nach einem der Ansprüche 1 bis 3, dadurch gekennzeichnet, daß in dem Ring (15) ein Ringkanal (18) angeordnet ist, von dem aus sich Kanäle (19) zur Innenseite (23) des Ringes erstrecken.

5. Vorrichtung nach einem der Ansprüche 1 bis 4, dadurch gekennzeichnet, daß der Schließkopf oberhalb des Ringes (15) gegeneinander verschiebbare Klemmbacken (12) und zentral zu diesen einen mit diesen zusammenwirkenden Siegelstempel (10) aufweist, der in einen Randflansch (3) des Deckels (2) eintauchbar ist.

6. Vorrichtung nach Anspruch 5, dadurch gekennzeichnet, daß der Stempel (10), die Backen (12) und der Ring (15) als eine Einheit heb- und senkbar angeordnet sind.

20 117

0214372

FIG.1

FIG.2

ZO 777

C214372

FIG.3

FIG.5

FIG.4

FIG.6

EUROPÄISCHER RECHERCHENBERICHT

Europäisches Patentamt

**0214372**

Nummer der Anmeldung

# EINSCHLÄGIGE DOKUMENTE

EP 86107581.0

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | <u>GB - A - 727 999</u> (THE METAL BOX) <br> * Fig. 4,5 * <br><br> -- | 1,2,6 | B 65 B 31/04 |
| D,A | <u>US - A - 2 915 862</u> (STOVER) <br> * Gesamt * <br><br> -- | 1 | |
| A | <u>EP - A2 - 0 099 159</u> (SHIKOKU KAKOOKI CO.) <br> * Fig. 1,2; pos. 6,7 * <br><br> ---- | 5 | |

| | RECHERCHIERTE SACHGEBIETE (Int. Cl.4) |
|---|---|
| | B 65 B 7/00 <br> B 65 B 31/00 <br> B 65 B 55/00 |

Der vorliegende Recherchenbericht wurde für alle Patentansprüche erstellt.

| Recherchenort <br> WIEN | Abschlußdatum der Recherche <br> 25-11-1986 | Prüfer <br> MELZER |
|---|---|---|

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82